# EUROPÄISCHE PATENTSCHRIFT

(11) **EP 3 145 800 B1**
(45) Veröffentlichungstag und Bekanntmachung des Hinweises auf die Patenterteilung: **03.07.2019**
(21) Anmeldenummer: 15719237.8
(22) Anmeldetag: 05.05.2015
(51) Int. Cl.: B62K 3/00, B62K 15/00

(54) **EINSPURIGER TRETROLLER**
SINGLE TRACK KICK SCOOTER
TROTTINETTE À VOIE UNIQUE

(30) Priorität: 21.05.2014 DE 102014209686
(43) Veröffentlichungstag der Anmeldung: 29.03.2017
(73) Patentinhaber: Bayerische Motoren Werke Aktiengesellschaft, 80809 München (DE)
(72) Erfinder: BOBINGER, Robert, 86316 Hügelshart (DE); GRUENWALD, Ernst, 80935 München (DE); BACHMANN, Fabian, 80639 München (DE); OCHNER, Udo, 85778 Haimhausen (DE)
(86) Internationale Anmeldenummer: PCT/EP2015/059759
(87) Internationale Veröffentlichungsnummer: WO 2015/176946

(56) Entgegenhaltungen:
- EP-A1- 2 338 773
- EP-A1- 2 444 308
- WO-A1-99/00290
- CN-Y- 201 193 072
- DE-A1- 10 052 822
- DE-A1-102010 027 997
- DE-U1- 20 022 864
- DE-U1- 29 815 162
- KR-B1- 101 207 922
- US-A1- 2014 008 882

## Beschreibung

Die vorliegende Erfindung betrifft einen einspurigen Tretroller gemäß dem Oberbegriff des Patentanspruchs 1.

Bei heutigen im Markt befindlichen Roller gibt es Varianten für Kinder, die als klassische Tretroller vertrieben werden und als Vorstufe zum Fahrrad gelten. Unter pädagogischen Aspekten trainieren die Kinder den Gleichgewichtssinn, ihre Beinmuskulatur und Erlernen ein Gefühl für Geschwindigkeit, Lenken und Bremsen. Solche Produkte gibt es in unterschiedlichen Größen, die alle ausschließlich über Muskelkraft angetrieben werden. Aufgrund ihrer geringen geometrischen Abmaße und ihrer Klappfunktion, können diese Tretroller zusammengeklappt werden und bspw. in öffentlichen Gebäuden oder öffentlichen Nahverkehrsmitteln mitgeführt werden.

Aufgrund der geringen Radgröße eignen sich diese Roller nicht dazu, um längere Fahrstrecken zurückzulegen. Nicht nur die geringe Laufruhe sondern auch ein schlechtes Überrollverhalten von Hindernissen schränkt die Nutzungsfreundlichkeit dieser Produkte ein.

Daneben sind auch Tretroller bekannt, mit denen erwachsene Personen sich fortbewegen können. Diese sind bspw. aus der Gebrauchsmusterschrift DE 20 2010 003 077 U1 sowie aus der EP 2 338 773 B1 bekannt. Solche Roller sind bauartbedingt verhältnismäßig groß und eignen sich nicht zur Mitnahme im Auto oder in öffentlichen Gebäuden. Die Dokumente EP2338773 B1, DE20022864 U1, und WO99/00290 A1 offenbaren jeweils einen einspurigen Tretroller gemäß dem Oberbegriff von Anspruch 1. Ausgehend von diesem Stand der Technik, macht es sich die vorliegende Erfindung zur Aufgabe, einen Tretroller anzugeben, der die Nachteile des Standes der Technik überwindet. Es ist eine besondere Aufgabe der Erfindung einen Tretroller anzugeben, der sich durch gute Fahreigenschaften in puncto Fahrkomfort und Fahrsicherheit auszeichnet und dabei gleichzeitig auf ein besonders niedriges Packmaß zusammen gefaltet werden kann.

Diese Aufgabe wird mit einem Tretroller mit den Merkmalen des Anspruchs 1 gelöst. Vorteilhafte Ausführungsformen sind in den Unteransprüchen angegeben.

Zur Lösung dieser Aufgabe schlägt die Erfindung einen einspurigen Tretroller zum Transport von Personen vor, mit einem Vorderrad, einem Hinterrad, wobei die Räder in Längsrichtung des Rollers hintereinander angeordnet sind, einer Gabel, zum Aufnehmen und Führen des Vorderrades und einem Rahmen, der dreiteilig ausgebildet ist und eine Gabelaufnahme, ein Mittelteil und eine Hinterradaufnahme umfasst. Dabei kann die Gabelaufnahme bzgl. des Mittelteils um eine erste Drehachse drehbar gelagert sein und die Hinterradaufnahme bzgl. des Mittelteils um eine zweite Drehachse drehbar gelagert sein. Weiterhin können die Drehachsen mit der Längsachse des Rollers einen spitzen Winkel einschließen. Durch die schräg gestellten Drehachsen kann die Hinterradaufnahme mit daran angeordnetem Hinterrad und die Gabelaufnahme mit daran angeordneter Gabel und Vorderrad so zusammengefaltet werden, dass die beiden Räder platzsparend nebeneinander über dem Mittelteil positioniert sind. Dadurch können besonders niedrige Abmaße im zusammen gefalteten Zustand realisiert werden.

Weiterhin können die Drehachsen zueinander parallel ausgerichtet sein. Dadurch können symmetrische Schwenkbewegungen des Vorder- und des Hinterrads realisiert werden, bei denen eine Kollision der aufeinander zu beweglichen Teile verhindert wird. Darüber hinaus können durch die parallele Ausrichtung der Drehachsen viele Gleichteile verwendet werden.

Abweichend hierzu, können die Drehachsen zueinander auch nicht parallel ausgerichtet sein. In diesem Fall schließen die Drehachsen mit der Längsachse des Rollers unterschiedliche spitze Winkel ein. Jeder Winkel kann im Bereich von 45° bis 90° liegen, wobei die Eckwerte dieser Bereichsangabe mit umfasst sind.

Weiterhin können in beiden Ausführungsformen die Drehachsen in einer Ebene angeordnet sein, wobei die Drehachsen beide in derselben Ebene verlaufen. Diese Ausführungsform bietet den Vorteil, dass das Mittelteil des Rahmens besonders flach ausgebildet sein kann.

Weiterhin kann der Tretroller aus einem fahrbereiten Zustand in einen eingeklappten Zustand und umgekehrt überführbar sein, wobei in einem eingeklappten Zustand das Vorderrad und das Hinterrad über dem Mittelteil positioniert sind und eine Lenkeinrichtung im Wesentlichen zwischen den Rädern angeordnet ist. Die Lenkeinrichtung kann dabei aus einer Lenkstange ausgebildet sein, die über einen Vorbau mit der Gabel verbunden ist. In einer bevorzugten Ausführungsform ist die Lenkstange höhenverstellbar, um die Lenkeinrichtung an die Körpergröße unterschiedlicher Personen anpassen zu können. Weiterhin kann die Lenkstange bzw. der Vorbau ebenfalls klappbar an der Gabel angeordnet sein, wodurch sich die Abmaße des Rollers im zusammengefalteten Zustand zusätzlich reduzieren lassen. Durch Positionieren der Lenkeinheit zwischen die Räder, kann im eingeklappten Zustand verhindert werden, dass sich die Lenkstange beim Transportieren des zusammengeklappten Rollers mit Gegenständen in der Umgebung verhakt oder anderweitig in Berührung kommt.

Darüber hinaus kann eine Arretiereinrichtung vorgesehen sein, mit der die Position der Räder im fahrbereiten Zustand des Rollers und/oder im eingeklappten Zustand des Tretrollers arretierbar ist. Dadurch kann mit ein und derselben Arretiereinrichtung die Hinterradaufnahme sowie die Gabelaufnahme als Teil des Rahmens arretiert werden. Die Hinterradaufnahme und die Gabelaufnahme können dabei im ausgeklappten Zustand, d.h. im fahrbereiten Zustand des Tretrollers arretiert werden und im zusammengeklappten Zustand ebenfalls durch die Arretiereinrichtung gegen Verstellung blockiert werden. Dies bietet den Vorteil, dass im fahrbereiten Zustand ein Zusammenklappen des Tretrollers verhindert wird. Analog dazu wird verhindert, dass im eingeklappten Zustand einzelne Elemente, wie bspw. die Hinterradaufnahme oder die Gabelaufnahme ausklappen. Zusätzlich können Fixiereinrichtungen vorgesehen sein, wobei mit mindestens einer Fixiereinrichtung die Gabelaufnahme an dem Mittelteil des Rahmens und mit mindestens einer weiteren Fixiereinrichtung die Hinterradaufnahme an dem Mittelteil des Rahmens fixierbar ist, wenn sich der Tretroller in einem fahrbereiten Zustand befindet. Dies bietet den Vorteil, dass nach Lösen der Arretiereinrichtung, d.h. wenn sich der Tretroller in einem ausgeklappten, jedoch nicht arretierten Zustand befindet, der Tretroller nicht allein aufgrund seines Eigengewichtes in eine Zwischenposition zwischen dem zusammengeklappten Zustand und dem fahrbereiten Zustand fällt. Vielmehr bleibt der Roller, obwohl entarretiert, in einer Position, die dem fahrbereiten Zustand entspricht. Durch verhältnismäßig geringe Kraftaufwendung, können die Fixiereinrichtungen aus ihrer Fixierposition gelöst werden und die Hinterradaufnahme sowie die Gabelaufnahme eingeklappt werden.

Die Räder des Tretrollers können eine Größe im Bereich von 12" bis 20" aufweisen. Die Rädergröße hat sich als vorteilhaft erwiesen in puncto Überrollverhalten sowie Fahrstabilität. Die Räder des Tretrollers können weiterhin als Speichenräder ausgebildet sein und mit Luftreifen versehen werden.

Darüber hinaus kann der Tretroller einen elektrischen Antrieb aufweisen, zum Erzeugen eines Vortriebs des Tretrollers. Durch den elektrischen Antrieb kann die Reichweite des Tretrollers erheblich vergrößert werden im Vergleich zu einer reinen muskulären Betätigung.

Weiterhin kann der elektrische Antrieb einen elektrischen Motor umfassen, der bevorzugt als Radnabenmotor ausgebildet ist und in dem Vorderrad und/oder dem Hinterrad integriert ist. Damit kann auf zusätzliche mechanische Antriebselemente wie Ketten oder Getriebestufen verzichtet werden, woraus sich ein äußerst wartungsarmer Roller ergibt.

Zusätzlich oder alternativ kann der elektrische Antrieb einen Energiespeicher, insbesondere einen Akkumulator, eine Batterie oder einen kapazitiven Energiespeicher umfassen, wobei der Energiespeicher im Mittelteil des Rahmens angeordnet sein kann. Dies bietet den Vorteil, dass der verhältnismäßig schwere Energiespeicher relativ weit unten am Rahmen des Rollers angeordnet ist, so dass sich ein sehr niedriger Schwerpunkt erzielen lässt.

Zusammenfassend sollen nochmals im Folgenden die Vorteile der vorliegenden Erfindung genannt werden. Durch die Verwendung von Rädern größer 12 Zoll kann ein gutes Überrollverhalten aufgrund flacher Radauflaufwinkel erzeugt werden, wodurch sich höhere Geschwindigkeiten erzielen lassen bei gleichzeitig hohem Komfort und guten Fahreigenschaften. Dadurch lässt sich der Tretroller auch auf schlechten Bodenbeschaffenheiten uneingeschränkt nutzen. Das Sicherheitsgefühl für den Fahrer wird erhöht und dabei gleichzeitig das Unfallrisiko reduziert. Der Tretroller ist prädestiniert für die urbane Nutzung, als Erweiterung zu Kraftfahrzeugen, die zur Personenbeförderung bekannt sind. Durch die geringen Abmaße im zusammengeklappten Zustand kann der Tretroller besonders einfach beispielsweise in den Kofferraum handelsüblicher Kraftfahrzeuge (PKWs) eingebracht oder im öffentlichen Nahverkehr mitgeführt werden. Durch die Elektrifizierung des Rollers über dem Nabenmotor kann die Reichweite vergrößert werden, bzw. die Anstrengung einer Bedienerperson zur Fortbewegung reduziert werden. Damit kann der Tretroller mit Motorunterstützung benutzt werden, um längere Strecken zu bewältigen und andererseits mit Muskelkraft betrieben werden, insbesondere in Bereichen, in denen motorbetriebene Fahrzeuge nicht gestattet sind, wie bspw. Fußgängerzonen, Gebäude, öffentliche Nahverkehrsmittel usw.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung:
- Fig. 1a: eine Seitenansicht eines Tretrollers im fahrbereiten Zustand,
- Fig. 1b: eine Draufsicht des Tretrollers im fahrbereiten Zustand,
- Fig. 2a: eine Seitenansicht des Tretrollers im zusammengeklappten Zustand,
- Fig. 2b: eine Draufsicht des Tretrollers im zusammengefalteten Zustand,
- Fig. 3a: eine Draufsicht des Tretrollers im fahrbereiten Zustand, mit Blick auf die Arretiereinrichtung
- Fig. 3b: eine vergrößerte Detaildarstellung der Arretiereinrichtung,
- Fig. 3c: eine perspektivische Ansicht der Arretiereinrichtung,
- Fig. 3d: eine perspektivische Ansicht eines Details der Arretiereinrichtung,
- Fig. 3e: eine Seitenansicht auf einen Arretierbolzen,
- Fig. 3f: eine Schnittansicht durch den Arretierbolzen aus Fig. 3e entlang der Schnittlinie A-A, und
- Fig. 3g: eine Teilschnittansicht entlang der Schnittlinie B-B aus Fig. 1b.

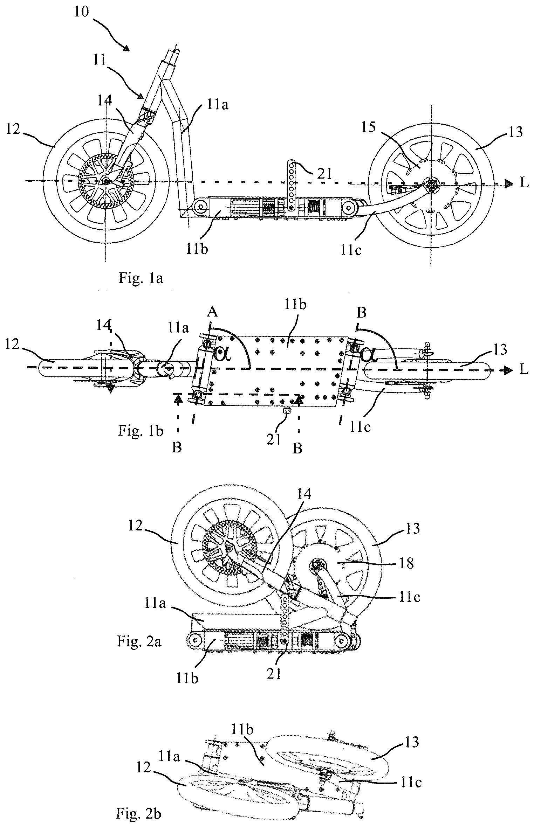

Der Gesamtaufbau des Tretrollers 10 soll anhand der Fig. 1a und 1b erläutert werden, in denen der Tretroller 10 in einem fahrbereiten Zustand abgebildet ist. Der Tretroller 10 umfasst einen Rahmen 11, ein Vorderrad 12, ein Hinterrad 13, eine Vorderradführung 14 und eine nicht dargestellte Lenkeinheit. Die Vorderradführung 14 ist als Gabel ausgebildet und ist in einem Steuerrohr drehbar gelagert und damit an dem Rahmen 11 angeordnet. Mit Hilfe der nicht dargestellten Lenkeinheit lässt sich das Vorderrad 12 um eine Lenkachse drehen, wodurch Kurvenfahrten mit dem Roller 10 ermöglicht werden.

Der Rahmen 11 des Tretrollers ist dreiteilig aufgebaut mit einer Gabelaufnahme 11a, einem Mittelteil 11b und einer Hinterradaufnahme 11c. Das Steuerrohr ist ein Bestandteil der Gabelaufnahme 11a. Die Gabelaufnahme 11a ist um eine erste Drehachse A drehbar bzw. schwenkbar mit dem Mittelteil 11b verbunden. Analog dazu ist die Hinterradaufnahme 11c über eine zweite Drehachse B mit dem Mittelteil 11b verbunden und um diese Drehachse B schwenkbar bzw. drehbar. In Längsrichtung L des Tretrollers sind die beiden Räder 12, 13 hintereinander angeordnet. Die in den Fig. 1a und 1b eingezeichnete Längsrichtung l zeigt mit dem Pfeil entgegen der Fahrtrichtung des Tretrollers, wie sie bei einer Vorwärtsbewegung durchgeführt wird. Die Drehachsen A und B schließen mit der Längsachse L des Tretrollers einen spitzen Winkel ein. Wie in Fig. 1b ersichtlich ist, ist gemäß einer ersten Ausführungsform der Winkel bei beiden Drehachsen A, B gleich groß. Gemäß einer weiteren, nicht dargestellten Ausführungsform können die Drehachsen A, B auch unterschiedliche Winkel mit der Längsachse L des Rollers einschließen.

In den Fig. 2a und 2b ist der Tretroller 10 im zusammengeklappten Zustand dargestellt. Zum Überführen des Tretrollers aus einem fahrbereiten Zustand in einen zusammengeklappten Zustand wird die Gabelaufnahme 11a durch eine Drehung im Uhrzeigersinn um die erste Drehachse A gedreht, so dass sich das Vorderrad 12 im Wesentlichen oberhalb des Mittelteils 11b befindet.

Die Hinterradaufnahme 11c mit daran angeordnetem Hinterrad 13 wird um die zweite Drehachse B im Gegenuhrzeigersinn geschwenkt, bis das Hinterrad 13 oberhalb des Mittelteils 11b angeordnet ist. Wie aus Fig. 2b ersichtlich ist, befinden sich im zusammengefalteten Zustand die beiden Räder 12, 13 nebeneinander, oberhalb des Mittelteils 11b. Die in den Figuren nicht dargestellte Lenkeinheit ist ebenfalls schwenkbar an der Gabel befestigt. Mit Hilfe eines Schnellspanners kann die Lenkeinheit gelöst werden und an der Gabel 14 oberhalb des Steuerrohrs abgeknickt werden, so dass im zusammengefalteten Zustand die Lenkeinheit oberhalb des Mittelteils 11b zwischen dem Vorderrad 12 und dem Hinterrad 13 angeordnet ist. Wie aus den Fig. 1a bis 2b ersichtlich ist, kann an dem Vorderrad 12 eine Scheibenbremse vorgesehen sein. Am Hinterrad 13 kann ebenfalls eine Scheibenbremse angeordnet sein.

In einer elektrisch angetriebenen Variante des faltbaren Tretrollers 10 ist ein elektrischer Motor 15 als Radnabenmotor im Hinterrad 13 ausgebildet. In diesem Fall kann anstatt einer hinteren Scheibenbremse auch über Induktion das Hinterrad gebremst werden. In einer weiteren, alternativen Ausführungsform der Erfindung kann der Radnabenmotor 15 auch in der Nabe des Vorderrades 12 ausgebildet sein.

Mit Hilfe eines Hebels 21, kann eine Arretiereinrichtung 20 aus einer arretierten Position in eine entarretierte Position überführt werden. In der entarretierten Position, können die Gabelaufnahme 11a und die Hinterradaufnahme 11c um ihre jeweiligen Drehachsen A, B verschwenkt werden. Das heißt, wenn sich der Hebel 21 in einer entarretierten Stellung befindet, kann der Roller 10 aus einem fahrbereiten Zustand in einen zusammengeklappten Zustand und umgekehrt überführt werden. In den Figuren 1a bis 2b ist der Hebel 21 in einer entarretierten Stellung. Durch Verdrehen des Hebels 21 in eine im Wesentlichen waagerechte Position, wird die Arretiereinrichtung 20 in einen arretierten Zustand überführt. Dadurch wird die Hinterradführung 11c und die Gabelaufnahme 11a in der jeweiligen Position fixiert wobei der Roller 10 in dem jeweiligen Zustand, d.h. im fahrbereiten Zustand oder im zusammengeklappten Zustand, arretiert wird.

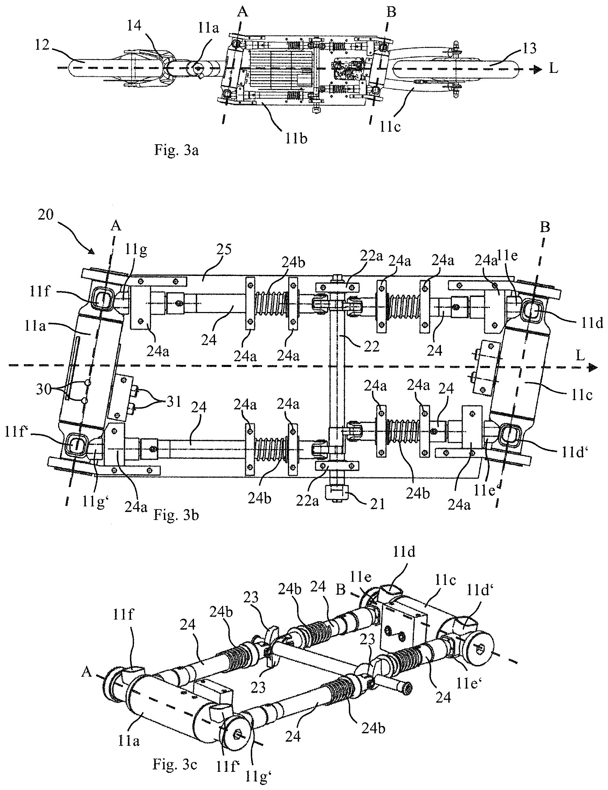

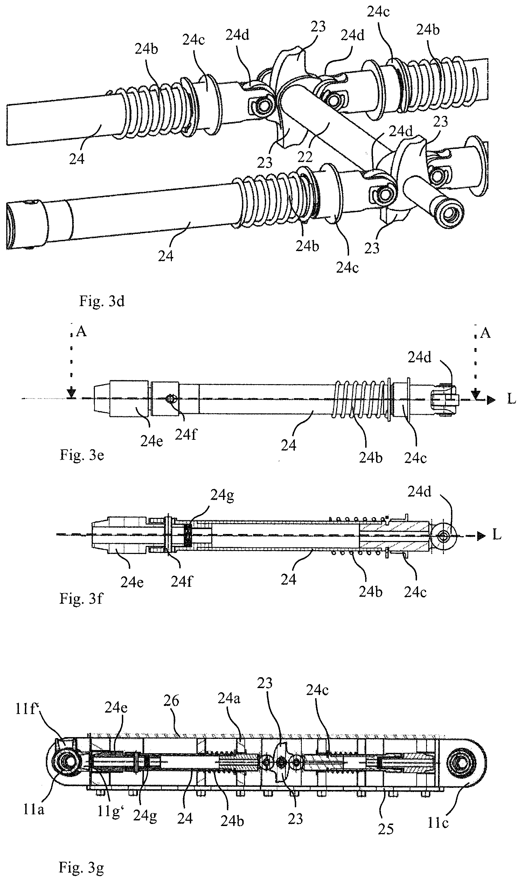

Mit Bezug zu den Fig. 3a bis 3g soll nun im Folgenden die Funktion der Arretiereinrichtung 20 erläutert werden. Fig. 3a zeigt eine weitere Draufsicht auf den Tretroller 10 im fahrbereiten Zustand, wobei eine obere Abdeckung des Mittelteils 11b entfernt wurde. Dieses Oberteil kann als Deckplatte 26 ausgebildet sein, auf der ein Trittbrett montierbar ist. Alternativ dazu kann die Deckplatte 26 selbst als Trittbrett ausgestaltet sein.

In der elektrifizierten Variante des Tretrollers 10, kann der elektrische Energiespeicher 40 auf der Bodenplatte 25 angeordnet sein. Dieser kann beispielsweise zwischen den Arretierbolzen 24 zum Arretieren der Gabelaufnahme 11a montiert werden. Zwischen den hinteren Arretierbolzen 24, zum Arretieren der Hinterradaufnahme 11c kann ein Batteriemanagementsystem 41 angeordnet werden. Die Bodenplatte 25 kann auch als eine Wanne ausgebildet sein, in der die Arretiereinrichtung 20 gegebenenfalls mit Energiespeicher feuchtigkeits- und schmutzgeschützt untergebracht sind.

Fig. 3b zeigt eine vergrößerte Darstellung der Arretiereinrichtung 20. Über einen Hebel 21 lässt sich die Arretiereinrichtung 20 in eine entarretierte Stellung überführen. Diese entarretierte Stellung ist in den Fig. 3a bis 3f dargestellt. Der Hebel 21 ist drehfest mit einer Welle 22 befestigt, an der vier Nocken 23 angeordnet sind. Die Nocken 23 stehen in berührendem Kontakt mit Arretierbolzen 24. Durch Betätigen des Hebels 21, d.h. durch Drehen des Hebels 21 wird auch die Welle 22 um ihre Längsachse gedreht. Die Welle 22 ist in Lagerungen 22a gelagert. Zum Arretieren der Arretiereinheit 20, üben die Nocken 23 eine Kraft auf die Arretierbolzen 24 aus, die in Längsrichtung der Arretierbolzen 24 wirkt. Dadurch werden die Arretierbolzen 24 in ihrer Längsrichtung, die auch der Längsrichtung L des Tretrollers entspricht, verschoben. Jeder Arretierbolzen 24 ist über Lagerungen 24a mit der Bodenplatte 25 des Mittelteils 11b verbunden. Dadurch können die Arretierbolzen 24 im Wesentlichen in ihrer Längsrichtung Linearbewegungen durchführen. Ein Ende des Arretierbolzens 24, das dem Nocken 23 abgewendet ist, kann mit einer entsprechenden Aufnahme 11g, 11g', 11f, 11f' in Eingriff gebracht werden. Diese Aufnahme, bzw. Ausnehmung ist in der Gabelaufnahme 11a vorgesehen. Durch Rotation der Gabelaufnahme 11a um die Drehachse A, kann wahlweise eine erste Ausnehmung 11g, 11g' oder eine zweite Ausnehmung 11f, 11f' so positioniert werden, dass die jeweilige Ausnehmung mit einem entsprechenden Bolzen 24 in Eingriff gebracht werden kann. Durch Arretieren des Arretierbolzens 24 mit einer Ausnehmung 11g bzw. 11g', wird die Gabelaufnahme 11a in einer Position arretiert, in der der Tretroller 10 fahrbereit ist. In einer zusammengeklappten Position der Gabelaufnahme 11a, sind durch Drehung der Gabelaufnahme um die Drehachse A die Ausnehmungen 11f und 11f' so ausgerichtet, dass sie mit dem Arretierbolzen 24 in Eingriff gebracht werden können. Dadurch wird die Gabelaufnahme 11a in einem zusammengefalteten Zustand des Rollers 10 arretiert. Analog dazu funktioniert auch die Arretierung der Hinterradführung bzw. der Hinterradaufnahme 11c. In Eingriffsbereich sind die äußere Form der Arretierbolzen 24 und die innere Form der Ausnehmungen 11g, 11g', 11f, 11f' korrespondierend ausgebildet, so dass ein guter Formschluss erzielbar ist im Falle einer Arretierung.

Die Gabelaufnahme 11a wird über zwei vordere Arretierbolzen 24 arretiert. Die Hinterradaufnahme 11c wird über - in Längsrichtung L - zwei hintere Arretierbolzen 24 arretiert. In einer arretierten Position ist jeder Arretierbolzen über eine Feder 24b vorgespannt, wobei die Federkraft den Arretierbolzen 24 in Richtung der Welle 22 drückt. Mit anderen Worten: Die druckbelastete Feder 24b hat die Aufgabe den jeweiligen Arretierbolzen 24 nach dem entriegeln bzw. entarretieren aus der Ausnehmung 11g, 11g', 11f, 11f' herauszuziehen. Beim Überführen der Arretiereinrichtung 20 in einen arretierten Zustand drücken die Nocken 23 auf die Arretierbolzen und arbeiten somit gegen die Federkraft 24b. Beispielhaft und nicht einschränkend ist die Feder 24b als Schraubenfeder ausgebildet.

Wie aus Fig. 3d ersichtlich ist, sind die Nocken 23 in Längsrichtung der Welle 22 hintereinander angeordnet, wobei je eine Nocke 23 zur Betätigung eines vorderen Arretierbolzens 24 und je eine Nocke 23 zur Betätigung eines hinteren Arretierbolzens 24 vorgesehen ist. An dem Ende des Arretierbolzens 24, das dem Nocken 23 zugewandt ist, weist jeder Arretierbolzen 24 eine Rolle 24d auf. Diese vermindert die Reibung zwischen Arretierbolzenende und Nocke 23, wodurch sich die Kräfte zum Arretieren und Entarretieren des Rollers 10 reduzieren und die Bedienerfreundlichkeit gesteigert wird. Die Federkraft jeder Feder 24b wirkt so, dass sie den jeweiligen Arretierbolzen 24 beim Lösen der Vorspannung über den Hebel 21 aus den Ausnehmungen 11g, 11g', 11f, 11f' herauszieht. Die Federn 24b stützen sich einerseits an den, der Drehachse A, B zugewandten Lagerung 24a und anderseits an einem auf dem Arretierbolzen 24 montierten Seegering 24c ab.

Die Arretiereinrichtung 20 weist einen Verschleißausgleich und Toleranzausgleich auf, der nachfolgend mit Bezug zu den Fig. 3e und 3g erläutert werden soll. Der Arretierbolzen 24 weist ein erstes axiales Ende auf, an dem die Rolle 24d angeordnet ist. Das gegenüberliegende Ende ist ein Ende des Bolzens 24, mit dem dieser mit den Ausnehmungen 11d, e, f, g in Eingriff gebracht werden kann. An diesem Ende des Arretierbolzens 24 ist eine Kappe 24e vorgesehen, die in axialer Richtung des Arretierbolzens 24 verschiebbar gelagert ist und die mit der Ausnehmung 11g, 11g', 11f, 11f' in Eingriff bringbar ist. Über einen Führungsstift 24f, kann die Kappe 24e in axialer Richtung vorwärts und rückwärts verschoben werden, wobei sie gegen Lösen von dem Arretierbolzen 24 gesichert ist. Die Kappe 24e stützt sich über ein Tellerfedernpaket 24g gegenüber dem Basiskörper des Arretierbolzens 24 ab. Beim Arretieren der Gabelaufnahme 11a oder der Hinterradführung 11c, kommt die Kappe 24e in berührenden Kontakt mit der Ausnehmung 11d, e, f, g. Dabei treten aufgrund von Reibung Verschleißerscheinungen auf, wodurch sich im Laufe der Zeit der Kontaktpunkt zwischen Kappe 24e und Ausnehmung 11g, 11g', 11f, 11f' verlagern kann. Das Tellerfedernpaket 24g sorgt dafür, dass die Kappe 24e in axialer Richtung nachgeschoben wird, so dass stets eine sichere Arretierung mit gleichbleibender Vorspannkraft gewährleistet ist. Der Führungsstift 24f gleitet dabei in einer Nut, deren Länge den möglichen Hub für den Wirkbereich des Tellerfederpakets begrenzt. Die Arretierung der Hinterradaufnahme 11c funktioniert analog, wobei die rückwärtig ausgerichteten Arretierbolzen 24 in die Ausnehmungen 11e, 11e', 11d, 11d' eingreifen.

Der Tretroller 10 weist eine Fixiereinrichtung auf, zur Vorkonditionierung des Rahmens 11, bevor er arretiert wird. Die Fixiereinrichtung soll unter Bezugnahme auf die Fig. 3b erläutert werden. In der Gabelaufnahme 11a sind zwei Ausnehmungen 30, hier kreisrund dargestellt, vorgesehen. Diese sind fluchtend mit den Ausnehmungen 11f und 11f' ausgerichtet. An der Bodenplatte 25 ist eine Halterung vorgesehen, in der Fixierstifte 31 angeordnet sind. Diese Fixierstifte 31 sind als Federstifte ausgebildet und geeignet, mit den Ausnehmungen 30 zu verrasten. Dadurch kann die Gabelaufnahme 11a in einer Position fixiert werden, in der die Bolzen 24 in die Ausnehmungen 11f und 11f' eingreifen können. Baugleiche Ausnehmungen 30 sind so ausgerichtet und in der Gabelaufnahme 11a vorgesehen, dass sie mit den Federstiften 31 verrasten können, wenn die Ausnehmungen 11g, 11g' in Verlängerung der Arretierbolzen 24 ausgerichtet sind. In der Figur 3b ist die Gabelaufnahme 11a in der zuletzt beschriebenen Position fixiert. Die Fixiereinrichtung bietet damit den Vorteil, dass beim Verschwenken der Gabelaufnahme 11a von einem zusammengefalteten Zustand in einen ausgeklappten Zustand und umgekehrt die Gabelaufnahme 11a in diskreten Positionen einrastet, in denen dann die Arretierbolzen 24 besonders sicher in die entsprechenden Ausnehmungen 11g, 11g', 11f, 11f' eingeführt werden können. Dadurch wird zum einen der Verschleiß an den Arretierbolzen 24 reduziert, und zum anderen auch eine mühsame Einstellung der Arretierposition verhindert. Nicht zuletzt bietet die Fixiereinrichtung auch den Vorteil, dass bei Entarretieren des Tretrollers 10 dieser nicht unmittelbar kollabiert, sondern metastabil stehen bleibt, bis er durch einen Bediener zusammengefaltet oder entfaltet wird. Dazu wird vom Bediener das Mittelteil 11b bzw. das Trittbrett mit geringem Kraftaufwand angehoben oder niedergedrückt. Dies kann vom Bediener alternativ auch durch Bewegung des Lenkers nach vorne oder nach hinten geschehen. Eine analoge Fixiereinrichtung ist auch an der Hinterradführung 11c vorgesehen.

### Bezugszeichenliste

- 10.: einspuriger Tretroller
- 11.: Rahmen
- 11a.: Gabelaufnahme
- 11b.: Mittelteil
- 11c.: Hinterradaufnahme
- 12.: Vorderrad
- 13.: Hinterrad
- 14.: Gabel
- 15.: elektrischer Motor
- 20.: Arretiereinrichtung
- 21.: Hebel
- 22.: Welle
- 23.: Nocke
- 24.: Arretierbolzen
- 24a.: Lagerung
- 24b.: Feder
- 24c.: Federanschlag/Seegering
- 24d.: Rolle
- 24e.: Kappe
- 24f.: Führungsstift
- 24g.: Tellerfeder
- 25.: Bodenplatte
- 26.: Deckplatte/Trittbrett
- 30.: Fixiereinrichtung
- 31.: Fixierstift
- 40.: Energiespeicher
- 41.: Batteriemanagementsystem

## Patentansprüche

1. Einspuriger Tretroller (10) zum Transport von Personen, mit:
einem Vorderrad (12), einem Hinterrad (13), wobei die Räder (12, 13) in Längsrichtung (L) des Tretrollers (10) hintereinander angeordnet sind,
einer Gabel (14), zum Aufnehmen und Führen des Vorderrads (12), und einem Rahmen (11), der dreiteilig ausgebildet ist und eine Gabelaufnahme (11a), ein Mittelteil (11b) und eine Hinterradaufnahme (11c) umfasst und bei dem die Gabelaufnahme (11a) bezüglich des Mittelteils (11b) um eine erste Drehachse (A) drehbar ist und die Hinterradaufnahme (11c) bezüglich des Mittelteils (11b) um eine zweite Drehachse (B) drehbar ist,
**dadurch gekennzeichnet, dass**
die Drehachsen (A, B) mit der Längsachse (L) des Tretrollers (10) einen spitzen Winkel (α) einschließen.

2. Tretroller (10) nach Anspruch 1, **dadurch gekennzeichnet, dass**
die Drehachsen (A, B) zueinander parallel ausgerichtet sind.

3. Tretroller (10) nach einem der Ansprüche 1 oder 2, **dadurch gekennzeichnet, dass**
die Drehachsen (A, B) in einer Ebene verlaufen.

4. Tretroller (10) nach einem der vorhergehenden Ansprüche 1 bis 3, **dadurch gekennzeichnet, dass**
der Tretroller (10) aus einem fahrbereiten Zustand in einen eingeklappten Zustand und umgekehrt überführbar ist, wobei in einem eingeklappten Zustand, das Vorderrad (12) und das Hinterrad (13) über dem Mittelteil (11b) positioniert sind und eine Lenkeinrichtung (15) im Wesentlichen zwischen den Rädern (12, 13) angeordnet ist.

5. Tretroller (10) nach einem der vorhergehenden Ansprüche 1 bis 4, **dadurch gekennzeichnet, dass**
eine Arretiereinrichtung (20) vorgesehen ist, mit der die Position der Räder (12, 13) im fahrbereiten Zustand des Tretrollers (10) und/oder im eingeklappten Zustand des Tretrollers (10) arretierbar ist.

6. Tretroller (10) nach einem der vorhergehenden Ansprüche 1 bis 5, **dadurch gekennzeichnet, dass** Fixiereinrichtungen (30, 30') vorgesehen sind, wobei mit mindestens einer Fixiereinrichtung (30) die Gabelaufnahme (11a) und mit mindestens einer weiteren Fixiereinrichtung (30') die Hinterradaufnahme (11c) fixierbar ist, wenn sich der Tretroller (10) in einem fahrbereiten Zustand befindet.

7. Tretroller (10) nach einem der vorhergehenden Ansprüche 1 bis 6, **dadurch gekennzeichnet, dass**
die Räder (12, 13) eine Größe von mindestens 12 Zoll, bevorzugt im Bereich von 12 Zoll bis 20 Zoll, aufweisen.

8. Tretroller (10) nach einem der vorhergehenden Ansprüche 1 bis 7, **dadurch gekennzeichnet, dass**
ein elektrisch Antrieb vorgesehen ist, zum Erzeugen eines Vortrieb des Tretrollers (10).

9. Tretroller (10) nach Anspruch 8, **dadurch gekennzeichnet, dass**
der elektrische Antrieb einen elektrischen Motor (15) umfasst, der als Radnabenmotor ausgebildet ist und in dem Vorderrad (12) und/oder dem Hinterrad (13) integriert ist.

10. Tretroller (10) nach einem der Ansprüche 8 oder 9, **dadurch gekennzeichnet, dass**
der elektrische Antrieb einen Energiespeicher (40), insbesondere eine Batterie, einen Akkumulator oder einen kapazitiven Energiespeicher (40) umfasst wobei der Energiespeicher (40) im Mittelteil (11b) des Rahmens (11) angeordnet ist.

## Claims

1. A single-track kick scooter (10) for transporting people, with:
a front wheel (12), a rear wheel (13), the wheels (12, 13) being arranged one behind another in the longitudinal direction (L) of the kick scooter (10), a fork (14) for mounting and guiding the front wheel (12),
and a frame (11) which is designed in three parts and comprises a fork mount (11a), a middle part (11b) and a rear-wheel mount (11c), and in which the fork mount (11a) is rotatable with respect to the middle part (11b) about a first axis of rotation (A) and the rear-wheel mount (11c) is rotatable with respect to the middle part (11b) about a second axis of rotation (B),
**characterised in that**
the axes of rotation (A, B) enclose an acute angle (α) with the longitudinal axis (L) of the kick scooter (10).

2. A kick scooter (10) according to Claim 1, **characterised in that**
the axes of rotation (A, B) are oriented parallel to each other.

3. A kick scooter (10) according to one of Claims 1 or 2, **characterised in that** the axes of rotation (A, B) run in one plane.

4. A kick scooter (10) according to one of the preceding Claims 1 to 3, **characterised in that**
the kick scooter (10) can be converted from a state ready for use into a folded-up state and vice versa, with, in a folded-up state, the front wheel (12) and the rear wheel (13) being positioned over the middle part (11b) and a steering means (15) being arranged substantially between the wheels (12, 13).

5. A kick scooter (10) according to one of the preceding Claims 1 to 4, **characterised in that**
a locking means (20) is provided with which the position of the wheels (12, 13) can be locked in the state of the kick scooter (10) ready for use and/or in the folded-up state of the kick scooter (10).

6. A kick scooter (10) according to one of the preceding Claims 1 to 5, **characterised in that**
fixing means (30, 30') are provided, with the fork mount (11a) being able to be fixed with at least one fixing means (30) and the rear-wheel mount (11c) being able to be fixed with at least one further fixing means (30'), if the kick scooter (10) is in a state ready for use.

7. A kick scooter (10) according to one of the preceding Claims 1 to 6, **characterised in that**
the wheels (12, 13) have a size of at least 12 inches, preferably in the range of 12 inches to 20 inches.

8. A kick scooter (10) according to one of the preceding Claims 1 to 7, **characterised in that**
an electric drive is provided for generating a propulsion of the kick scooter (10).

9. A kick scooter (10) according to Claim 8, **characterised in that**
the electric drive comprises an electric motor (15) which is designed as a wheel-hub motor and is integrated in the front wheel (12) and/or the rear wheel (13).

10. A kick scooter (10) according to one of Claims 8 or 9, **characterised in that**
the electric drive comprises an energy accumulator (40), in particular a battery, a rechargeable battery or a capacitive energy accumulator (40), the energy accumulator (40) being arranged in the middle part (11b) of the frame (11).

## Revendications

1. Trottinette (10) à une seule ligne de roues destinée à permettre le transport de personnes, et ayant une roue avant (12), et une roue arrière (13), ces roues (12, 13) étant positionnées l'une derrière l'autre dans la direction longitudinale (L) de la trottinette (10),
une fourche (14) permettant de recevoir et de guider la roue avant (12), et
un cadre (11) qui est réalisé en trois parties et comporte un logement de réception de la fourche (11a), une partie médiane (11b) et un logement de réception de la roue arrière (11c), et dans lequel le logement de réception de la fourche (11a) est mobile en rotation par rapport à la partie médiane (11b) autour d'un premier axe de rotation (A) et le logement de réception de la roue arrière (11c) est mobile en rotation par rapport à la partie médiane (11b) autour d'un second axe de rotation (B),
**caractérisée en ce que**
les axes de rotation (A, B) définissent un angle aigu (α) avec l'axe longitudinal (L) de la trottinette (10).

2. Trottinette (10) conforme à la revendication 1,
**caractérisée en ce que**
les axes de rotation (A, B) sont orientés parallèlement l'un à l'autre.

3. Trottinette (10) conforme à l'une des revendications 1 et 2,
**caractérisée en ce que**
les axes de rotation (A, B) s'étendent dans un plan.

4. Trottinette (10) conforme à l'une des revendications précédentes 1 à 3,
**caractérisée en ce qu'**
elle peut être transférée, d'un état prêt au déplacement dans un état replié et inversement, à l'état replié, la roue avant (12) et la roue arrière (13) étant situées sur la partie médiane (11b), et un dispositif de direction (15) étant situé essentiellement entre les roues (12, 13).

5. Trottinette (10) conforme à l'une des revendications précédentes 1 à 4,
**caractérisée en ce qu'**
il est prévu un dispositif d'arrêt (20) permettant de bloquer la position des roues (12, 13) lorsque la trottinette (10) est à l'état prêt au déplacement et/ou à l'état replié.

6. Trottinette (10) conforme à l'une des revendications précédentes 1 à 5,
**caractérisée en ce qu'**
il est prévu des dispositifs de fixation (30, 30'), au moins un dispositif de fixation (30) permettant de fixer le logement de réception de la fourche (11a) et au moins un autre dispositif de fixation (30') permettant de fixer le logement de réception de la roue arrière (11c) lorsque la trottinette (10) se trouve à l'état prêt au déplacement.

7. Trottinette (10) conforme à l'une des revendications précédentes 1 à 6,
**caractérisée en ce que**
les roues (12, 13) ont une dimension d'au moins 12 pouces, de préférence située dans la plage de 12 pouces à 20 pouces.

8. Trottinette (10) conforme à l'une des revendications précédentes 1 à 7,
**caractérisée en ce qu'**
il est prévu un entraînement électrique pour permettre d'obtenir une propulsion de la trottinette (10).

9. Trottinette (10) conforme à la revendication 8,
**caractérisée en ce que**
l'entraînement électrique comporte un moteur électrique (15) qui est réalisé sous la forme d'un moteur de moyeu, et est intégré à la roue avant (12) et/ou à la roue arrière (13).

10. Trottinette (10) conforme à l'une des revendications 8 et 9,
**caractérisée en ce que**
l'entraînement électrique comporte un dispositif de stockage d'énergie (40), en particulier une batterie, un accumulateur ou un dispositif de stockage d'énergie capacitif (40), ce dispositif de stockage d'énergie (40) étant installé dans la partie médiane (11b) du cadre (11).
